# EUROPEAN PATENT SPECIFICATION

(11) **EP 0 551 740 B1**
(45) Date of publication and mention of the grant of the patent: **31.05.1995**
(21) Application number: 92311277.5
(22) Date of filing: 10.12.1992
(51) Int. Cl.: H01R 39/54, H02K 11/00, H02K 13/14

(54) **A miniature electric motor with a spark-quenching element**
Elektrischer Kleinstmotor mit Funkunterdrückungselement
Moteur électrique miniature muni d'un élément suppresseur d'étincelles

(30) Priority: 17.12.1991 JP 103870/91 U
(43) Date of publication of application: 21.07.1993
(73) Proprietor: MABUCHI MOTOR KABUSHIKI KAISHA, Matsudo-shi, Chiba-ken (JP)
(72) Inventor: Sakuma, Eiichi, Matsudo-shi, Chiba-ken (JP); Kashiwazaki, Yuji, Matsudo-shi, Chiba-ken (JP); Saiga, Kazumasa, Matsudo-shi, Chiba-ken (JP)
(74) Representative: Hitchcock, Esmond Antony

(56) References cited:
- DE-B- 1 938 229
- DE-B- 2 357 127
- US-A- 4 329 605
- PATENT ABSTRACTS OF JAPAN vol. 016, no. 088 (E-1173)4 March 1992
- MACHINE DESIGN vol. 62, no. 4, 22 February 1990, OHIO, US pages 69 - 72 E.GRAHAM 'Built-in arc suppressors boost cup-motor life'
- PATENT ABSTRACTS OF JAPAN vol. 015, no. 365 (E-1111)13 September 1991
- PATENT ABSTRACTS OF JAPAN vol. 004, no. 067 (E-011)20 May 1980
- PATENT ABSTRACTS OF JAPAN vol. 014, no. 568 (E-1014)18 December 1990
- PATENT ABSTRACTS OF JAPAN vol. 2, no. 118 (E-78)(6780) 30 September 1978
- PATENT ABSTRACTS OF JAPAN vol. 001, no. 119 (E-052)11 October 1977

## Description

This invention relates to miniature motors, for example of the type used in electric shavers and hair driers. It relates particularly to such motors having a spark-quenching element.

Spark-quenching elements are used in miniature electric motors to reduce spark generation at the sliding contact between the brushes and the commutator. Known such elements are effective, but tend to require more space than is readily available, and complicate motor assembly. The use of varistors has also been proposed, but in many circumstances such as when the power requirements are high, the capacity of the element can be insufficient.

The present invention addresses the problems inherent in the prior art. Particularly, it seeks to design a miniature motor in which a small number of components are required for the spark-quenching element. It is additionally concerned with improving motor torque and service life of miniature motors, and with keeping the overall size of such to a minimum.

Miniature motors suitable for use in this invention comprise a cylindrical housing closed at one end with an end cap closing the open end; a permanent magnet fitted to the inner surface of the housing; a rotor supported in bearings in the housing and end cap, the rotor including an armature and a commutator which makes sliding contact with brushes fitted to the end cap; input terminals in the end cap electrically connected to the brushes; and a spark-quenching element. According to the invention, the spark-quenching element comprises an annular laminated ceramic capacitor having an electrostatic capacity of more than 1 »F, and in which thin sheets formed of a highly dielectric material into a ring shape, and thin-film internal electrodes formed of an electrically conductive material into a sector shape are laminated alternately in the axial direction, the capacitor being formed by the overlapped portions of the internal electrodes of the same number as the number of poles of the armature in the projected plane orthogonally intersecting the axis, and having on its outer surface the same number of electrodes as the number of poles of the armature of the rotor.

Some known spark-quenching elements and their installation in miniature electric motors, and two embodiments of the present invention, will now be described by way of example and illustration, and with reference to the accompanying schematic drawings wherein:
Figure 1 is a longitudinal sectional view illustrating an example of a miniature electric motor to this invention may be applied;
Figures 2A and 2B are end and side views of a rotor used in a known miniature motor having a spark-quenching element;
Figures 3A and 3B are end and side views of another known spark-quenching element;
Figure 4 is an equivalent circuit diagram illustrating the electrical connections of capacitors and coils;
Figure 5 is a longitudinal sectional view illustrating a miniature motor according to one embodiment of this invention;
Figure 6 is an exploded perspective view showing the principle components of the rotor in the motor of Figure 5;
Figure 7 is a partly cut away enlarged perspective view of the spark-quenching element shown in Figures 5 and 6;
Figure 8 is an explanatory diagram illustrating the construction of the internal electrodes of the spark-quenching element shown in Figures 5 and 6;
Figures 9A, 9B and 9C are plan views illustrating major components of the spark-quenching element shown in Figures 5 and 6; and
Figure 10 is an enlarged perspective view showing a spark-quenching element according to another embodiment of this invention.

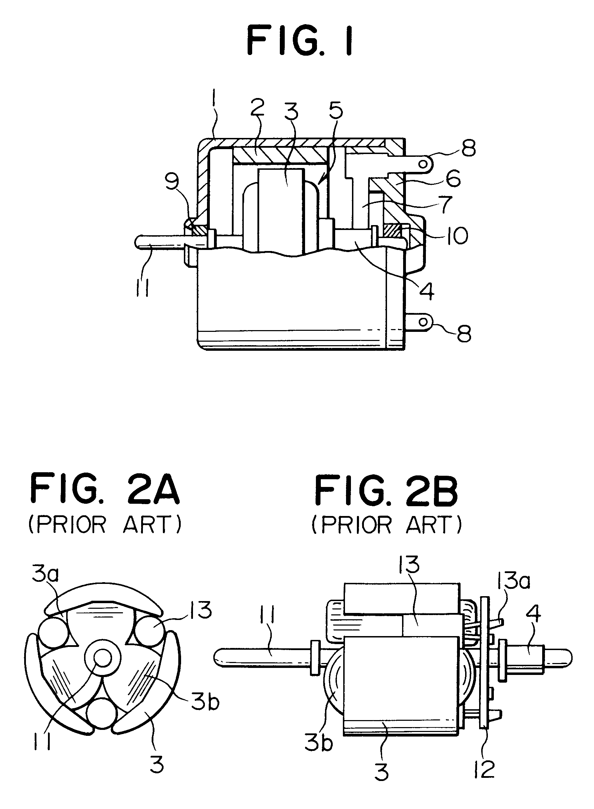

The miniature motor shown in Figure 1 comprises a housing 1 made of a metallic material, such as mild steel, and formed into a bottomed hollow cylinder, on the inner circumferential surface of which a permanent magnet 2 formed into an arc-segment shape, for example, is fitted. An end cap 6 made of an insulating material is fitted to the open end of the housing 1. A rotor 5 consisting of an armature 3 facing the permanent magnet 2, and a commutator 4, is rotatably mounted in bearings 9, 10 in the housing 1 and end cap 6. Brushes 7 are provided on the end cap 6, together with input terminals 8 electrically connected thereto. The free ends of the brushes 7 make sliding contact with the commutator 4. The motor operates in the conventional manner, with power being delivered to the input terminals 8, and to the armature 3 of the rotor 5 via the brushes 7 and the commutator 4, to drive external equipment (not shown) via the rotor shaft 11.

Miniature motors of the kind shown in Figure 1 exhibit high power characteristics. Their properties are also such that speed and positioning control can be easily effected using electronic circuits. On the other hand, they have the disadvantages of mutual abrasion and spark generation because of the sliding contact between the brushes 7 and the commutator 4. To overcome these disadvantages, miniature motors having spark-quenching elements have already been proposed, and two such elements are now discussed with reference to Figures 2 to 4.

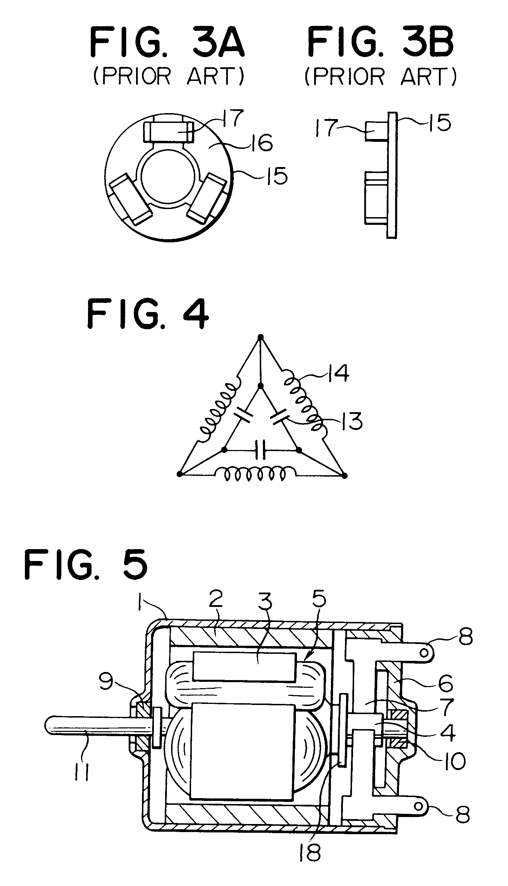

In the rotor shown in Figures 2A and 2B, a plate 12 is provided between the armature 3 and the commutator 4, to which electrolytic capacitors 13 are fitted. Three pieces, for example, of the electrolytic capacitors 13 are connected as shown in Figure 4. Reference 14 identifies a coil constituting the armature 3 shown in Figure 1, connected in parallel with the electrolytic capacitors 13.

The spark-quenching element just described requires a total of four components, i.e., the plate 12 and three electrolytic capacitors 13, complicating rotor assembly. Since the electrolytic capacitors 13 are fitted in the slots 3a of the armature 3, as shown in Figures 2, there is also a space limitation. If the electrostatic capacity of the capacitors 13 is to increase, the space available for the coil 3b that determines the torque of a miniature motor is accordingly limited. Further, when fitting the electrolytic capacitors 13, the insulating coating of the coil 3b may be damaged, causing shortcircuiting between layers. Also, the lead wires 13a of the electrolytic capacitors 13, where they protrude from the plate 12 can hamper efforts to reduce the thickness of the motor.

The spark-quenching element, shown in Figures 3 is substantially as disclosed in Japanese Published Utility Model Application No. 14709/1976, for example. In this example, a plate 15 made of an insulating material has a ring shape and a plurality of electrodes 16 applied on the surface thereof, chip capacitors 17 being mounted across electrodes 16. When chip capacitors 17 having a large capacity are used, however, their thickness increases, and so does the thickness of the plate 15. This also hampers efforts to reduce the overall dimensions of the motors.

Japanese Published Utility Model Application No. 42457/1976 discloses the use of washer-type varistors as spark-quenching elements. In this example, a plurality of divided electrodes are formed on at least the circumferential surface of a varistor proper formed into an annular shape, with the electrostatic capacity of the varistor being as small as dozens of nF. At high voltages over 30 V, for example, the dispersion of varistor voltage becomes extremely large, increasing the dispersion of the spark-quenching effect. Further the electrostatic capacity becomes as small as a few nF in inverse proportion to the varistor voltage.

In miniature motors using voltages as low as 2.4 V for example, a large current is needed to obtain high power. The service life of a miniature motor can be improved by the characteristics of the varistor proper so long as the voltage is within the range of 2.4 - 30 V. When varistors are used in a miniature motor having a high-voltage specification with a motor terminal voltage of over 30 V, as described above, and one having a large-current and high-output specification of under 2.4 V, the electrostatic capacity of the spark-quenching element could be insufficient.

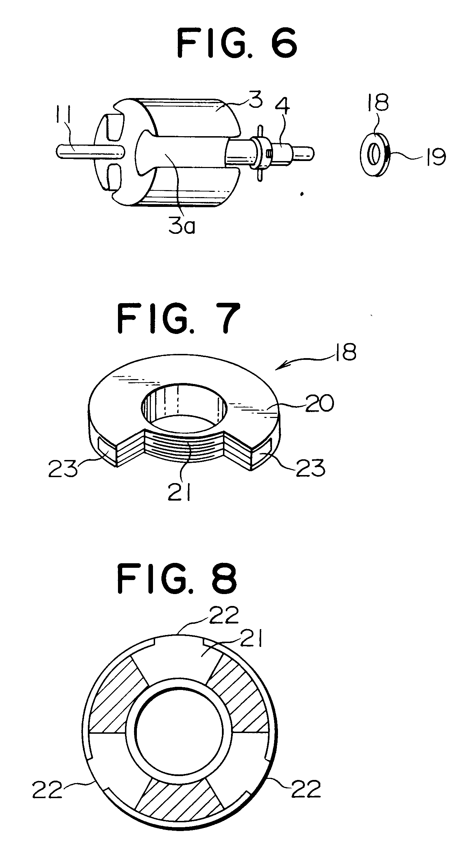

According to the embodiment of the invention shown in Figures 5 and 6, a spark-quenching element 18 comprises a laminated ceramic capacitor made of a highly dielectric ceramic material, such as barium titanate, which will be described later. The element 18 is formed into a ring shape and fitted to the shaft 11 between the armature 3 and the commutator 4. It has on its outer periphery the same number (three in this embodiment) of electrodes 19 as the number of poles of the armature 3.

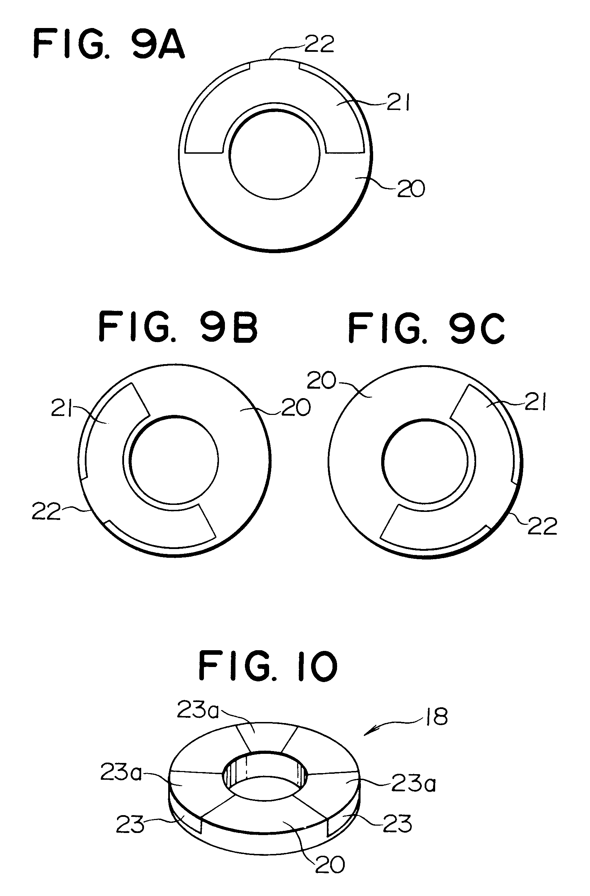

Figure 7 is a partly cutaway enlarged perspective view of the spark-quenching element 18 shown in Figures 5 and 6. Figure 8 is a diagram of assistance in explaining the construction of the internal electrodes of the aforementioned spark-quenching element 18. figures 9A and 9B are plan views illustrating major components of the aforementioned spark-quenching element 18. In Figures 7 to 9, numeral 20 identifies a ring-shaped thin sheet made of a highly dielectric material, such a barium titanate, and numeral 21 an internal electrode formed into a sector shape with the central angle thereof being 180 degrees. Each electrode 21 has a terminal 22 facing the outer circumferential surface thereof. The ring-shaped thin sheets 20 and the internal electrodes 21 are laminated alternately, and a capacitor is formed by the portions where the internal electrodes 21 overlap (as shown by shaded portions), as shown in Figure 8. An electrode 23 is connected to each terminal 22 to electrically connect the commutator 4 and the armature 3 shown in Figure 5.

Tests were conducted on miniature motors in which the spark-quenching elements of the type described above with reference to Figures 5 to 9 were incorporated. The tests were based upon continuous operation with an applied voltage of 38 volts d-c and a fan load of approximately 20g, and the results are shown below. In this test, I₀ = 210 mA, and N₀ = 22,000 rpm. In the table, the results for a miniature motor equipped with a varistor and one without a spark-quenching element are also shown at (4) and (5).

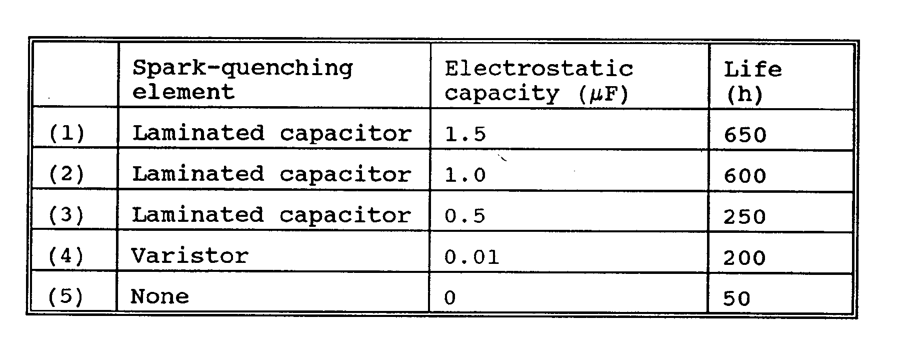

As is evident from the table above, the motor without spark-quenching element (Test 5) had a service life of only 50 hours. With the motor using a varistor (Test 4), service life was extended to 200 h. Because of its electrostatic capacity of 0.01 »F, it had an insufficient spark-quenching effect. Those motors equipped with spark-quenching elements formed by laminated ceramic capacitors in the aforementioned manner (Tests 1 to 3) on the other hand, had a remarkable spark-quenching effect and an extended service life because of their high electrostatic capacity. By increasing electrostatic capacity beyond 1 »F, it was found that a service life standard in excess of 300 hours is readily achieved; a level quite acceptable for household appliances, such as electric shavers and hair driers. Thus, the invention enable the life of a miniature motor to be substantially extended.

A number of highly dielectric materials can be used in the capacitors incorporated in motors of this invention, such as titanium oxide, magnesium titanate, calcium titanate, strontium titanate, barium titanate, lead titanate and lead zirconate. However, barium titanate, having a relatively high dielectric constant, is preferred.

Capacitors of electrostatic capacity less than 1 »F are not normally recommended because of the relatively low motor life extending effect to be expected. Miniature motors used for electric shavers and hair driers for example, commonly require a warranty for 250-hour continuous operation, with the acceptable standard often being set at 300 hours for the sake of safety. For this reason the minimum electrostatic capacity of the capacitor incorporated in motors of this invention is 1 »F.

Figure 10 is an enlarged perspective view illustrating a spark-quenching for use in another embodiment of this invention. Like parts are indicated by like numerals used in Figure 7. In the element of Figure 10, an electrode 23a formed into an essentially sector shape is provided on the end face of the ring-shaped thin sheet 20. The electrodes 23a are electrically connected to the electrodes 23 provided on the outer periphery of the ring-shaped thin sheets 20. With this construction, the spark-quenching element can be easily mounted on the rotor, and electrical connection between the commutator 4 and the armature 3 is facilitated.

Although in the embodiments described the outer circumferential shape of the spark-quenching element is substantially circular, other geometric shapes may be used. The thickness of the ring-shaped disc and the number of lamination of the discs may be selected appropriately in accordance with the respective motor specifications. Materials used for the ring-shaped disc and the internal electrode of the spark-quenching element may also be appropriately selected.

The invention offers the following particular benefits:
(1) Since the spark-quenching element has a very simple construction, a large number of components are not required. Thus, motor production is facilitated, and the number of assembly manhours can be reduced.
(2) Thinner miniature motors can be manufactured because the axial thickness of the spark-quenching element is small. In addition, motor torque can be increased because the element does not significantly encroach upon the space required for the armature coil.
(3) Since the electrostatic capacity of the spark-quenching element can be relatively large, a remarkable spark-quenching effect can be achieved, and the service life of miniature motors can be substantially improved.

## Claims

1. A miniature electric motor comprising a cylindrical housing (1) closed at one end with an end cap (6) closing the open end; a permanent magnet (2) fitted to the inner surface of the housing (1); a rotor (5) supported in bearings (9,10) in the housing (1) and end cap (6), the rotor including an armature (3) and a commutator (4) which makes sliding contact with brushes (7) fitted to the end cap (6); input terminals (8) in the end cap (6) electrically connected to the brushes (7); and a spark-quenching element,
CHARACTERISED IN THAT
the spark-quenching element (18) comprises an annular laminated ceramic capacitor having an electrostatic capacity of more than 1 »F, and in which thin sheets (20) formed of a highly dielectric material into a ring shape, and thin-film internal electrodes (21) formed of an electrically conductive material into a sector shape are laminated alternately in the axial direction, the capacitor being formed by the overlapped portions of the internal electrodes (21) of the same number as the number of poles of the armature (30) in the projected plane orthogonally intersecting the axis, and having on its outer surface the same number of electrodes (19) as the number of poles of the armature (3) of the rotor (5).

2. A miniature motor according to Claim 1 wherein the same number of sector-shaped electrodes (21) as the number of poles of the armature (3) are provided on the end face of the laminated ceramic capacitor, and
electrically connected to corresponding electrodes (23) provided on the outer circumferential surface thereof.

3. A miniature motor according to Claim 1 or Claim 2 wherein the outer profile of the spark-quenching element (18) is circular.

4. A miniature motor according to any preceding Claim wherein the spark-quenching element (18) is fitted to the motor rotor (5).

## Patentansprüche

1. Elektrischer Kleinstmotor enthaltend ein endseitig geschlossenes zylindrisches Gehäuse (1) mit einer Abschlußkappe (6) zum Abdecken des anderen Gehäuseendes, einen Permanentmagneten (2), der an der inneren Oberfläche des Gehäuses (1) angebracht ist, einen Rotor (5), der mittels Lager (9, 10) im Gehäuse (1) und der Abdeckkappe (6) gelagert ist, welcher Rotor einen Anker (3) und einen Kommutator (4) aufweist, der in gleitendem Kontakt mit Bürsten (7) steht, die an der Abdeckkappe (6) vorgesehen sind, Zuleitungsanschlüsse (8), die in der Abdeckkappe (6) vorgesehen sind und mit den Bürsten (7) elektrisch verbunden sind, und eine Funkenlöscheinrichtung,
**dadurch gekennzeichnet**,
daß die Funkenlöscheinrichtung (18) einen ringförmigen laminierten Keramikkondensator mit einer elektrostatischen Kapazität von mehr als 1 »F enthält, bei dem dünne Blätter (20) aus einem hochdielektrischen Werkstoff in Ringform und interne Dünnfilmelektroden (21) aus elektrisch leitendem Werkstoff in Sektorform in der Axialrichtung abwechselnd aufeinander laminiert sind, der Kondensator aus einer mit der Anzahl der Pole des Ankers (30) übereinstimmenden Anzahl einander überlappender Abschnitte der internen Elektroden (21) in der die Achse senkrecht schneidenden Projektionsebene gebildet ist und auf seiner Außenfläche eine mit der Anzahl der Pole des Ankers (3) des Rotors (5) übereinstimmende Anzahl Elektroden (19) aufweist.

2. Kleinstmotor nach Anspruch 1, bei dem eine mit der Anzahl der Pole des Ankers (3) übereinstimmende Anzahl sektorförmiger Elektroden (23a) auf der Stirnfläche des laminierten Keramikkondensators vorgesehen ist und diese Elektroden mit entsprechenden Elektroden (23) auf der äußeren Umfangsoberfläche des Keramikkondensators elektrisch verbunden sind.

3. Kleinstmotor nach Anspruch 1 oder Anspruch 2, bei dem das Außenprofil der Funkenlöscheinrichtung (18) kreisförmig ist.

4. Kleinstmotor nach irgendeinem vorangegangenen Anspruch, bei dem die Funkenlöscheinrichtung (18) am Motorrotor (5) befestigt ist.

## Revendications

1. Moteur électrique miniature comprenant un logement cylindrique (1) fermé sur une extrémité par un capuchon d'extrémité (6) obturant l'extrémité ouverte; un aimant permanent (2) fixé sur la surface interne du logement (1); un rotor (5) monté sur des paliers (9, 10) dans le logement (1) et le capuchon d'extrémité (6), le rotor comprenant un induit (3) et un collecteur (4) qui fait contact coulissant avec les balais (7) fixés sur le capuchon d'extrémité (6); des bornes d'entrée (8) dans le capuchon d'extrémité (6) raccordées électriquement aux balais (7); et un élément pare-étincelles,
caractérisé en ce que
l'élément pare-étincelles (18) comprend un capaciteur en céramique stratifiée annulaire ayant une capacité électrostatique supérieure à 1 »F, et dans lequel des feuilles minces (20) réalisées en un matériau fortement diélectrique en forme d'anneau, et des électrodes internes à pellicule mince (21) réalisées en un matériau électriquement conducteur en forme de secteur sont stratifiées alternativement dans la direction axiale, le capaciteur étant constitué par les parties en chevauchement des électrodes internes (21) du même nombre que le nombre de pôles de l'induit (30) dans le plan en projection coupant orthogonalement l'axe, et possédant sur sa surface externe le même nombre d'électrodes (19) que le nombre de pôles de l'induit (3) du rotor (5).

2. Moteur miniature selon la revendication 1, dans lequel il est prévu le même nombre d'électrodes en forme de secteur (21) que le nombre de pôles de l'induit (3) sur la face d'extrémité du capaciteur en céramique stratifiée, et raccordées électriquement aux électrodes correspondantes (23) montées sur sa surface circonférentielle externe.

3. Moteur miniature selon la revendication 1 ou la revendication 2, dans lequel le profil extérieur de l'élément pare-étincelles (18) est circulaire.

4. Moteur miniature selon l'une quelconque des revendications précédentes, dans lequel l'élément pare-étincelles (18) est fixé sur le rotor du moteur (5).
